# EUROPÄISCHE PATENTSCHRIFT

(11) **EP 2 176 094 B1**
(45) Veröffentlichungstag und Bekanntmachung des Hinweises auf die Patenterteilung: **13.04.2011**
(21) Anmeldenummer: 09757395.0
(22) Anmeldetag: 19.05.2009
(51) Int. Cl.: B60R 21/217

(54) **AIRBAGMODUL**
AIRBAG MODULE
MODULE SAC GONFLABLE

(30) Priorität: 02.06.2008 DE 102008026795
(43) Veröffentlichungstag der Anmeldung: 21.04.2010
(73) Patentinhaber: Takata-Petri AG, 63743 Aschaffenburg (DE)
(72) Erfinder: FECHNER, Tobias, 63743 Aschaffenburg (DE); SAHM, Norbert, 63739 Aschaffenburg (DE); KEMPE, Christian, 63743 Aschaffenburg (DE)
(74) Vertreter: Baumgärtel, Gunnar
(86) Internationale Anmeldenummer: PCT/EP2009/056076
(87) Internationale Veröffentlichungsnummer: WO 2009/147012

(56) Entgegenhaltungen:
- EP-A1- 1 625 982
- EP-A2- 1 331 141
- GB-A- 2 406 312
- US-B1- 6 299 200

## Beschreibung

Die Erfindung betrifft ein Airbagmodul nach dem Oberbegriff des Anspruchs 1 wie es aus US 6 299 200 bekannt ist.

Es sind Airbagmodule mit einem Gasgenerator, einem Gassack und einem Diffusor bekannt. So ist aus der EP 1 625 982 A1 ein Beifahrerairbagmodul bekannt, bei dem ein Komponentensystem aus dem Gassack, dem Diffusor, dem Gasgenerator und einem schalenförmigen Gassackhalteteil vorgesehen ist, das zwischen dem Airbaggehäuse und dem Gasgenerator angeordnet ist und das von dem unteren Abschnitt des selbsttragenden Gassacks mindestens teilweise umschlungen ist. Der Diffusor weist vier Bolzen auf, über die sämtliche vorgenannten Bauteile im Airbaggehäuse befestigt werden. Diese Anordnung weist den Vorteil auf, dass Komponenten vormontiert werden können, bevor sie in ein Airbaggehäuse eingebaut werden und dass diese vormontierte Baugruppe für unterschiedliche Airbaggehäuse geeignet ist. Der Nachteil besteht darin, dass mehrere Bauteile erforderlich sind, um den Gasgenerator und den Gassack im Airbaggehäuse zu befestigen. Außerdem ist ein erheblicher Bauraum erforderlich.

Aus der EP 1 331 141 A2 ist ein röhrenförmiger Diffusor bekannt, in den ein Rohrgasgenerator einschiebbar und befestigbar ist. Der Diffusor weist für die Fixierung des Gasgenerators im mittleren Bereich eine Auflage und zwei Noppen auf, die im Winkelabstand zueinander und zur Auflage vorgesehen sind, an denen der Gasgenerator anliegt. Der Nachteil dieser Anordnung besteht darin, dass der Diffusor an seinen Enden zusätzliche Elemente für die axiale Sicherung des Gasgenerators sowie für die Abdichtung aufweisen muss.

Der Erfindung liegt die Aufgabe zugrunde, einen Diffusor so auszubilden, dass zusätzliche Elemente an den Enden des Diffusors für die Abdichtung und axiale Fixierung gegenüber dem Gasgenerator nicht erforderlich sind.

Erfindungsgemäß wird das gemäß den Merkmalen des Anspruchs 1 erreicht.

Bei einem Airbagmodul mit Gasgenerator, Gassack und Diffusor ist erfindungsgemäß der Diffusor als partiell an seinen Enden eng am Gasgenerator anliegendes Bauteil ausgebildet, wobei der Diffusor im Bereich der Gasaustrittsöffnungen des Gasgenerators mit Abstand zum Gasgenerator verläuft. Dadurch dass der Diffusor an seinen Enden eng am Gasgenerator anliegt, ist einerseits keine zusätzliche axiale Fixierung des Gasgenerators erforderlich und andererseits ist keine zusätzliche Abdichtung an den Enden des Diffusors erforderlich. Weiterhin wird der Bauraum für die Baugruppe Gasgenerator/Diffusor weiter verringert.

Erfindungsgemäß ist der Diffusor bei einem rohrförmigen Gasgenerator als Rohr ausgebildet, das an seinen beiden Enden eng am Gasgenerator anliegt und zwischen den Enden so ausgebildet ist, dass ein Ringspalt zwischen dem Gasgenerator und dem Diffusor vorhanden ist. In einer bevorzugten Ausführungsform ist vorgesehen, dass der Diffusor aus Blech hergestellt ist, wobei sich die seitlichen Enden des Bleches bei der Montage am Gasgenerator überlappen, und dass die Überlappungen durch mindesten einen Bolzen fixiert sind, der außerdem für die Befestigung des Gasgenerators und des Gassacks in einem Airbagmodulgehäuse mittels Mutter bestimmt ist. Neben den bereits genannten Vorteilen ergibt sich bei dieser Ausführungsform der Vorteil, dass der Gassack ohne zusätzliche Bauteile im Airbagmodul befestigt werden kann und dass der Gassack außerdem vor heißen Gasen des Gasgenerators geschützt ist.

Vorzugsweise sind bei der letztgenannten Ausführungsform zwei Bolzen mit Muttern an den am Gasgenerator anliegenden Enden des Diffusors vorgesehen und das Airbagmodulgehäuse weist im Bereich der Enden des Gasgenerators Auflageflächen für den Gasgenerator auf. Als Auflageflächen sind vorzugsweise eingebeulte Abschnitte des Airbagmodulgehäuses vorgesehen. Vorzugsweise ist der Diffusor im Gassack angeordnet.

Bei den Bolzen und zugeordneten Muttern kann es sich allgemein um erste und zweite Befestigungselemente handeln, die in geeigneter Weise zusammenwirken. Die Befestigungselemente sowie die Ausformung des Diffusors dienen zum Festklemmen des Gasgenerators am Airbagmodulgehäuse.

Hierzu definieren insbesondere die Auflageflächen erste, am Gasgenerator anliegende Klemmstellen zum Festklemmen des Gasgenerators am Airbagmodulgehäuse, wobei insbesondere an den Enden des Diffusors je eine zweite, am Gasgenerator anliegende Klemmstelle vorgesehen ist, wobei jeweils eine zweite Klemmstelle einer ersten Klemmstelle zugeordnet ist und dieser gegenüberliegt, so dass je eine erste und eine zugeordnete zweite Klemmstelle beidseitig des Gasgenerators angeordnet sind. Zwischen diesen Klemmstellen ist der Gasgenerator bevorzugt zum Festlegen des Gasgenerators am Airbagmodulgehäuse eingeklemmt. Bei entsprechender Auslegung reicht ein Klemmstellenpaar aus, d.h., der Gasgenerator kann in diesem Fall lediglich über eines seiner Enden bzw. einen einzelnen Gehäusebereich des Gasgenerators am Modulgehäuse festgeklemmt werden.

Sofern das erste und das zweite Befestigungselement als Bolzen bzw. Mutter ausgebildet sind, ist die jeweilige Mutter so angezogen, dass der Diffusor den Gasgenerator über die ersten Klemmstellen gegen die zweiten Klemmstellen drückt.

Ein Verfahren zur Herstellung eines Diffusors für ein vorgenanntes Airbagmodul ist erfindungsgemäß dadurch gekennzeichnet, dass ein für die Herstellung eines Diffusors vorgesehenes Blech in einem Abschnitt, in dem nach der Montage des Diffusors ein Ringspalt zwischen dem Gasgenerator und dem Diffusor vorgesehen ist, zunächst tief gezogen wird und anschließend zu einem Zylinder zusammengerollt wird. Der Herstellungsprozess des Diffusors umfasst im wesentlichen nur zwei Schritte. Zusätzlich ist lediglich das Einbringen der Diffusoröffnungen und der Löcher für das Einführen der Befestigungsbolzen erforderlich. Diese können aber in bekannter Weise vor dem Tiefziehen und Rollen durch Stanzen eingebracht werden.

Die Erfindung soll in einem Ausführungsbeispiel an Hand von Zeichnungen erläutert werden. Es zeigen:
Fig. 1 einen Längsschnitt durch einen rohrförmigen Diffusor mit darin angeordnetem Rohrgasgenerator;
Fig.2 einen Querschnitt durch die Fig. 1 entlang der Linie II - II,
Fig. 3 eine perspektivische Ansicht des Rohrgasgenerators mit Diffusor.

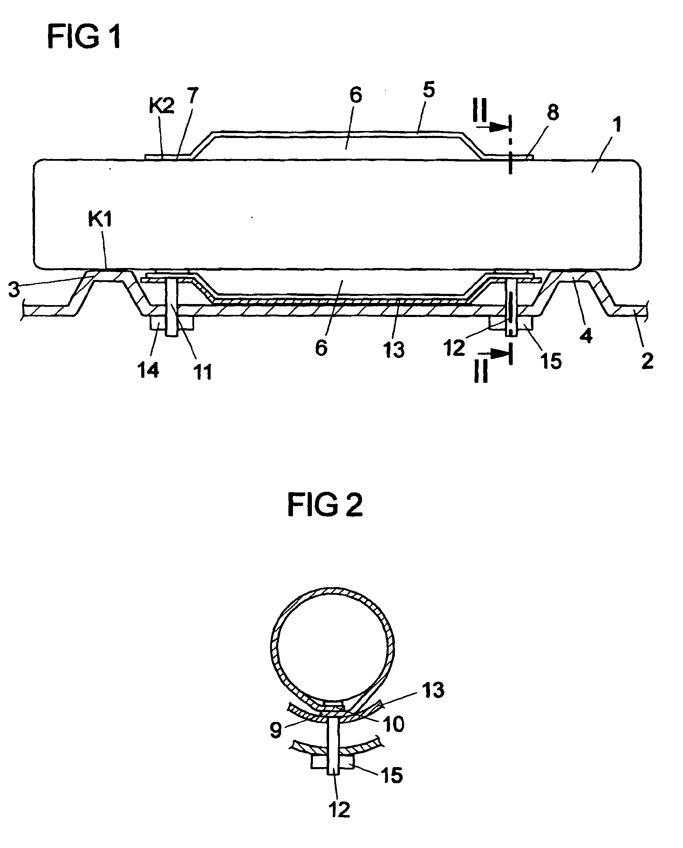

Die Fig. 1 zeigt einen Gasgenerator in Form eines Rohrgasgenerators 1, der in einem Airbagmodulgehäuse 2 zu befestigen ist. Die Figur zeigt nur einen unteren Abschnitt des Airbagmodulgehäuses, der eingebeulte Abschnitte 3, 4 für die Auflage des Gasgenerators 1 aufweist. Der Gasgenerator 1 ist von einem Diffusor 5 umgeben. Dieser besteht aus Blech, das zunächst leicht tief gezogen wird und anschließend zu einem Zylinder zusammengerollt wird. Der Tiefzug dient der Erzeugung eines Ringspaltes 6 um den Gasgenerator 1 herum, um eine ringförmige Gasabströmung aus dem Gasgenerator 1 zu ermöglichen. An seinen Enden 7, 8 liegt der Diffusor 5 eng am Gasgenerator 1 an. Durch nicht dargestellte Bohrungen an den überlappenden Enden 9, 10 des Diffusors 5 (Fig. 2) verläuft je ein hier als Bolzen 11, 12 ausgeführtes erstes Befestigungselement. Mittels dieser Bolzen 11, 12 wird der Diffusor 5 so zusammengehalten, dass er an seinen Enden 7, 8 eng am Gasgenerator 1 anliegt. Weiterhin dienen die Bolzen 11, 12 als Aufnahme und Positionierhilfe für einen Gassack 13 und ermöglichen durch die Verschraubung mit zweiten Befestigungselementen in Form von Muttern 14, 15 die Befestigung des Gasgenerators 1 und des Gassacks 13 im Airbagmodulgehäuse 2. Dabei werden durch das Anziehen der Mutter 14 am Bolzen 11 am Ende 7 des Diffusors 5 und am eingebeulten Abschnitt 3 die Klemmstellen K1 und K2 wirksam. Durch das Anziehen der Mutter 15 am Bolzen 12 werden die entsprechenden Klemmstellen K1, K2 am Ende 8 des Diffusors 5 und am eingebeulten Abschnitt 4 wirksam. Dadurch wird der Rohrgasgenerator 1 zwischen dem Diffusor 5 und dem Airbagmodulgehäuse 2 eingeklemmt. Hierbei weisen die Auflageflächen 3, 4 bzw. Klemmstellen K1 entlang des Airbagmodulgehäuses 2 bzw. entlang der Längsachse des Gasgenerators 1 einen Abstand zueinander auf, der größer ist als die Länge des den Gasgenerator 1 umgreifenden Diffusors 5 entlang der besagten Längsachse, so dass der Gasgenerator 1 lediglich über seine beiden (aus dem Diffusor 5 entlang der Längsachse) herausragenden Enden auf den Auflageflächen 3, 4 aufliegt. Insbesondere muss der Diffusor 5 dabei den zwischen den Auflageflächen 3, 4 erstreckten Gehäuseabschnitt des Airbagmodulgehäuses 2 nicht berühren. Jener Gehäuseabschnitt kann jedoch auch als Anschlag für den Diffusor 5 dienen, über den die Kraft mit der der Gasgenerator 1 an die Auflageflächen 3, 4 angepresst wird, regulierbar ist.

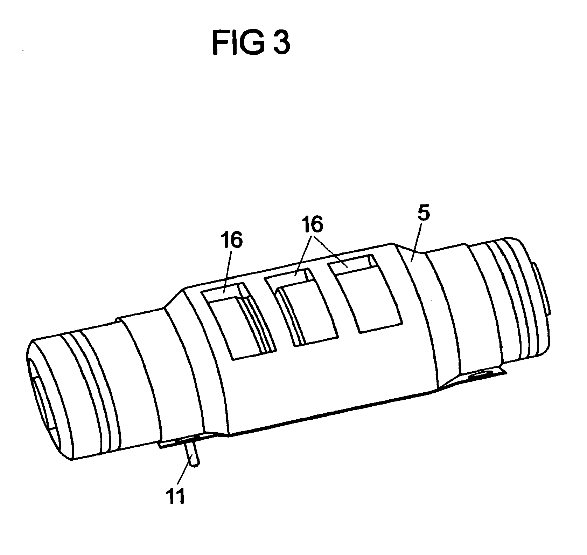

Vom Gassack 13 ist in der Fig.1 nur ein unterer Abschnitt dargestellt. Im Bereich des Ringspaltes 6 weist der Diffusor 5 Abströmöffnungen 16 auf (Fig. 3), durch die das Gas des Gasgenerators 1 in den Gassack 13 einströmen kann, der in der Fig. 3 nicht dargestellt ist.

Bei der Montage wird zunächst der Diffusor 5 in den Gassack 13 eingelegt und positioniert. Dabei werden die beiden Enden 9, 10 in ihre überlappende Lage gebracht und die Bolzen werden durch die dort vorgesehenen Bohrungen eingeführt. Anschließend wird der Rohrgasgenerator eingelegt und vorpositioniert. Das Gassackpaket mit Diffusor und Rohrgasgenerator wird anschließend im Airbagmodulgehäuse 2 positioniert. Nach dem axialen und radialen Ausrichten des Rohrgasgenerators 1 und dem Vorpositionieren des Diffusors 5 werden die Muttern 14, 15 angezogen und die Montage ist abgeschlossen.

## Patentansprüche

1. Airbagmodul mit Gasgenerator, Gassack, Diffusor und mit einem Airbagmodulgehäuse (2), insbesondere zum Tragen des Gasgenerators (1) und des Gassackes (13), wobei der Diffusor (5) als partiell an seinen Enden (7, 8) eng am Gasgenerator (1) anliegendes Bauteil ausgebildet ist, wobei der Diffusor (5) im Bereich der Gasaustrittsöffnungen des Gasgenerators (1) mit Abstand zum Gasgenerator (1) verläuft,
**dadurch gekennzeichnet, dass**
das Airbagmodulgehäuse (2) im Bereich der Enden des Gasgenerators (1) Auflageflächen (3, 4) für den Gasgenerator (1) aufweist, wobei als Auflageflächen eingebeulte Abschnitte (3, 4) des Airbagmodulgehäuses (2) vorgesehen sind, wobei der Gasgenerator (1) zum Festlegen des Gasgenerators (1) am Airbagmodulgehäuse (2) zwischen dem Diffusor (5) und dem Airbagmodulgehäuse (2) eingeklemmt ist, und wobei die Auflageflächen (3, 4) erste, am Gasgenerator (1) anliegende Klemmstellen (K1) zum Festklemmen des Gasgenerators (1) am Airbagmodulgehäuse (2) bilden.

2. Airbagmodul nach Anspruch 1, **dadurch gekennzeichnet, dass** der Diffusor (5) bei einem rohrförmigen Gasgenerator (1) als Rohr ausgebildet ist, das an seinen beiden Enden (7, 8) eng am Gasgenerator (1) anliegt und zwischen den Enden (7, 8) so ausgebildet ist, dass ein Ringspalt (6) zwischen dem Gasgenerator (1) und dem Diffusor (5) vorhanden ist.

3. Airbagmodul nach einem der Ansprüche 1 bis 2, **dadurch gekennzeichnet, dass** der Diffusor (5) aus Blech hergestellt ist, wobei sich die seitlichen Enden (9, 10) des Bleches bei der Montage am Gasgenerator (1) überlappen, und dass die Überlappungen durch mindestens ein erstes Befestigungselement (11, 12) fixiert sind,

4. Airbagmodul nach Anspruch 3, **dadurch gekennzeichnet, dass** das erste Befestigungselement (11, 12) außerdem für die Befestigung des Gasgenerators (1) und des Gassacks (13) in dem Airbagmodulgehäuse (2) mittels eines zweiten Befestigungselementes (14, 15), insbesondere in Form einer Mutter, bestimmt ist.

5. Airbagmodul nach einem der vorhergehenden Ansprüche, **dadurch gekennzeichnet, dass** jeweils ein erstes und ein zweites Befestigungselement (11, 12, 14, 15) an den am Gasgenerator (1) anliegenden Enden des Diffusors (5) vorgesehen ist.

6. Airbagmodul nach einem der vorhergehenden Ansprüche, **dadurch gekennzeichnet, dass** an den Enden (7, 8) des Diffusors (5) je eine zweite, am Gasgenerator (1) anliegende Klemmstelle (K2) ausgebildet ist, wobei jeweils eine zweite Klemmstelle (K2) einer ersten Klemmstelle (K1) zugeordnet ist und dieser zugewandt ist, so dass je eine erste und eine zugeordnete zweite Klemmstelle (K1, K2) zu beiden Seiten des Gasgenerators (1) angeordnet sind.

7. Airbagmodul nach Anspruch 6, **dadurch gekennzeichnet, dass** der Gasgenerator (1) zum Festklemmen des Gasgenerators (1) am Airbagmodulgehäuse (2) mit seinen beiden Enden jeweils zwischen einer ersten und einer zugeordneten zweiten Klemmstelle (K1, K2) eingeklemmt ist.

8. Airbagmodul nach Anspruch 6 oder 7, **dadurch gekennzeichnet, dass** an den Enden (7, 8) des Diffusors (5) benachbart zur jeweiligen Auflagefläche (3, 4) je ein erstes Befestigungselement (11, 12) und ein zugeordnetes zweites Befestigungselement (14, 15) vorgesehen ist, die so miteinander zusammenwirken, dass der Diffusor (5) den Gasgenerator (1) über die ersten Klemmstellen (K1) gegen die zweiten Klemmstellen (K2) drückt.

9. Airbagmodul nach mindestens einem der Ansprüche 3 bis 8, **dadurch gekennzeichnet, dass** das erste Befestigungselement durch einen Bolzen (11, 12) und das zweite Befestigungselement durch eine Mutter (14, 15) gebildet ist.

10. Airbagmodul nach Anspruch 9, **dadurch gekennzeichnet, dass** die Muttern (14, 15) an den Bolzen (11, 12) derart angezogen sind, dass der Diffusor (5) den Gasgenerator (1) über die ersten Klemmstellen (K1) gegen die zweiten Klemmstellen (K2) drückt.

11. Airbagmodul nach mindestens einem der vorhergehenden Ansprüche, **dadurch gekennzeichnet, dass** der Diffusor (5) im Gassack (13) angeordnet ist.

12. Verfahren zur Herstellung eines Diffusors für ein Airbagmodul nach den Ansprüchen 1 bis 11, **dadurch gekennzeichnet, dass** ein für die Herstellung eines Diffusors (5) vorgesehenes Blech in einem Abschnitt, in dem nach der Montage des Diffusors ein Ringspalt (6) zwischen dem Gasgenerator (1) und dem Diffusor (5) vorgesehen ist, zunächst tief gezogen wird und anschließend zu einem Zylinder zusammengerollt wird.

## Claims

1. Airbag module with a gas generator, airbag, diffuser and with an airbag module housing (2), in particular for carrying the gas generator (1) and the airbag (13), whereby the diffuser (5) is designed as a component partially fitting tightly at the ends (7, 8) thereof against the gas generator (1), whereby the diffuser (5) extends in the region of the gas outlet openings of the gas generator (1) at a distance from the gas generator (1),
**characterized in that**
the airbag module housing (2) has in the region of the ends of the gas generator (1) contact surfaces (3, 4) for the gas generator (1), whereby dented sections (3, 4) of the airbag module housing (2) are provided as contact surfaces, whereby the gas generator (1) is clamped between the diffuser (5) and the airbag module housing (2) for arranging the gas generator (1) on the airbag module housing (2), whereby the contact surfaces (3, 4) form first clamping points (K1) fitting against the gas generator (1) for clamping the gas generator (1) on the airbag module housing (2).

2. Airbag module according to claim 1, **characterized in that** the diffuser (5) is designed as a tube in case of a tubular gas generator (1), which fits tightly at the ends (7, 8) thereof against the gas generator (1) and is designed between the ends (7, 8) such that an annular gap (6) is located between the gas generator (1) and the diffuser (5).

3. Airbag module according to one of the claims 1 to 2, **characterized in that** the diffuser (5) is made of metal, whereby the lateral ends (9, 10) of the metal overlap during assembly on the gas generator (1), and that the overlaps are fixed by at least one securing element (11, 12).

4. Airbag module according to claim 3, **characterized in that** the first securing element (11, 12) is furthermore designed for the fixation of the gas generator (1) and the airbag (13) in the airbag module housing (2) by the means of a second securing element (14, 15), in particular in form of a nut.

5. Airbag module according to one of the preceding claims, **characterized in that** in each case a first and a second securing element (11, 12, 14, 15) are provided on the ends of the diffuser (5) fitting against the gas generator (1).

6. Airbag module according to one of the preceding claims, **characterized in that** on the ends (7, 8) of the diffuser (5) in each case a second clamping point (K2) fitting against the gas generator is formed whereby a respective second clamping point (K2) corresponds to a first clamping point (K1) and faces the same so that a respective first and a corresponding second clamping point (K1, K2) are arranged on both sides of the gas generator (1).

7. Airbag module according to the claim 6, **characterized in that** the gas generator (1) for clamping the gas generator (1) on the airbag module housing (2) is in each case clamped on its both ends between a first and a corresponding second clamping point (K1, K2).

8. Airbag module according to claim 6 or 7, **characterized in that** on the ends (7, 8) of the diffuser (5) adjacent to the respective contact surface (3, 4) in each case one first securing element (11, 12) and a corresponding second securing element (14, 15) are provided which interact with each other such that the diffuser (5) pushes the gas generator (1) over the first clamping point (K1) via the first clamping point (K1) against the second clamping point (K2).

9. Airbag module according to at least one of the claims 3 to 8, **characterized in that** the first securing element is formed by a pin (11, 12) and the second securing element is formed by a nut (14, 15).

10. Airbag module according to claim 9, **characterized in that** the nuts (14, 15) are tightened such that the diffuser (5) pushes the gas generator (1) via the first clamping point (K1) against the second clamping point (K2).

11. Airbag module according to one of the preceding claims, **characterized in that** the diffuser (5) is arranged in the airbag (13).

12. Method for assembling a diffuser for an airbag module according to the claims 1 to 11, **characterized in that** a metal sheet designated for the production of a diffuser (5) is at first thermoformed in a section, in which after the assembly of the diffuser an annular gap (6) between the gas generator (1) and the diffuser (5) is provided, and subsequently rolled up to a cylinder.

## Revendications

1. Module d'airbag avec un générateur de gaz, un coussin gonflable, un diffuseur et un boîtier de module d'airbag (2), en particulier pour porter le générateur de gaz (1) et le coussin gonflable (13), dans lequel le diffuseur (5) est réalisé sous forme de composant appliqué partiellement à ses extrémités (7, 8) étroitement sur le générateur de gaz (1), ledit diffuseur (5) s'étendant, dans la région des ouvertures de sortie de gaz du générateur de gaz (1), à distance du générateur de gaz (1),
**caractérisé en ce que**
le boîtier de module d'airbag (2) comporte, dans la région des extrémités du générateur de gaz (1), des surfaces d'appui (3, 4) pour le générateur de gaz (1), dans lequel des tronçons en creux (3, 4) du boîtier de module d'airbag (2) sont prévus comme surfaces d'appui, le générateur de gaz (1) est coincé, pour l'immobilisation du générateur de gaz (1) sur le boîtier de module d'airbag (2), entre le diffuseur (5) et le boîtier de module d'airbag (2), et dans lequel les surfaces d'appui (3, 4) forment des premiers emplacements de coincement (K1) appliqués contre le générateur de gaz (1), pour coincer fermement le générateur de gaz (1) sur le boîtier de module d'airbag (2).

2. Module d'airbag selon la revendication 1, **caractérisé en ce que**, dans le cas d'un générateur de gaz (1) de forme tubulaire, le diffuseur (5) est réalisé comme un tube qui est appliqué à ses deux extrémités (7, 8) étroitement sur le générateur de gaz (1) et qui est réalisé entre les extrémités (7, 8) de telle façon qu'une fente annulaire (6) est présente entre le générateur de gaz (1) et le diffuseur (5).

3. Module d'airbag selon l'une des revendications 1 et 2, **caractérisé en ce que** le diffuseur (5) est fabriqué en tôle, et les extrémités latérales (9,10) de la tôle se chevauchent lors du montage sur le générateur de gaz (1), et **en ce que** les chevauchements sont fixés par au moins un premier élément de fixation (11, 12).

4. Module d'airbag selon la revendication 3, **caractérisé en ce que** le premier élément de fixation (11, 12) est destiné en outre à la fixation du générateur de gaz (1) et du coussin gonflable (13) dans le boîtier de module d'airbag (2) au moyen d'un second élément de fixation (14, 15), en particulier sous la forme d'un écrou.

5. Module d'airbag selon l'une des revendications précédentes, **caractérisé en ce qu'**il est prévu respectivement un premier et un second élément de fixation (11, 12, 14, 15) aux extrémités du diffuseur (5) appliquées contre le générateur de gaz (1).

6. Module d'airbag selon l'une des revendications précédentes, **caractérisé en ce qu'**un second emplacement de coincement respectif (K2) appliqué contre le générateur de gaz (1) est réalisé aux extrémités (7, 8) du diffuseur (5), et un second emplacement de coincement (K2) est respectivement associé à un premier emplacement de coincement (K1) et tourné vers celui-ci, de sorte qu'un premier emplacement de coincement (K1) et un second emplacement de coincement associé (K2) sont respectivement agencés sur les deux côtés du générateur de gaz (1).

7. Module d'airbag selon la revendication 6, **caractérisé en ce que**, pour le coincement du générateur de gaz (1) dans le boîtier de module d'airbag (2), le générateur de gaz (1) est coincé par ces deux extrémités respectivement entre un premier et un second emplacement de coincement (K1, K2) associé.

8. Module d'airbag selon la revendication 6 ou 7, **caractérisé en ce que**, aux extrémités (7, 8) du diffuseur (5) et au voisinage de la surface d'appui respective (3, 4), il est prévu respectivement un premier élément de fixation (11, 12) et un second élément de fixation associé (14, 15) qui coopèrent l'un avec l'autre de telle façon que le diffuseur (5) presse le générateur de gaz (1) via les premiers emplacements de coincement (K1) contre les seconds emplacements de coincement (K2).

9. Module d'airbag selon l'une au moins des revendications 3 à 8, **caractérisé en ce que** le premier élément de fixation est formé par un boulon (11, 12), et le second élément de fixation est formé par un écrou (14, 15).

10. Module d'airbag selon la revendication 9, **caractérisé en ce que** les écrous (14, 15) sont serrés sur les boulons (11, 12) de telle façon que le diffuseur (5) presse le générateur de gaz (1) via les premiers emplacements de coincement (K1) contre les seconds emplacements de coincement (K2).

11. Module d'airbag selon l'une au moins des revendications précédentes, **caractérisé en ce que** le diffuseur (5) est agencé dans le coussin gonflable (13).

12. Procédé pour la fabrication d'un diffuseur destiné à un module d'airbag selon les revendications 1 à 11, **caractérisé en ce qu'**une tôle, prévue pour la fabrication d'un diffuseur (5) est tout d'abord soumise à un emboutissage profond dans un tronçon dans lequel une fente annulaire (6) est prévue entre le générateur de gaz (1) et le diffuseur (5) après le montage du diffuseur, et est ensuite roulée pour former un cylindre.
